# EUROPÄISCHE PATENTSCHRIFT

(11) **EP 1 420 875 B1**
(45) Veröffentlichungstag und Bekanntmachung des Hinweises auf die Patenterteilung: **16.07.2008**
(21) Anmeldenummer: 02703618.5
(22) Anmeldetag: 04.03.2002
(51) Int. Cl.: B01F 13/00, B01J 19/00, B01F 11/02, H03H 3/08, H03H 9/145, H03H 9/25, B01L 3/00

(54) **BEWEGUNGSELEMENT FÜR KLEINE FLÜSSIGKEITSMENGEN**
MOTION ELEMENT FOR SMALL QUANTITIES OF LIQUID
ELEMENT DE MISE EN MOUVEMENT POUR PETITES QUANTITES DE LIQUIDE

(30) Priorität: 31.08.2001 DE 10142789
(43) Veröffentlichungstag der Anmeldung: 26.05.2004
(73) Patentinhaber: Advalytix AG, 85649 Brunnthal (DE)
(72) Erfinder: SCRIBA, Jürgen, 80469 München (DE); GAUER, Christoph, 81667 München (DE)
(74) Vertreter: Manitz, Finsterwald & Partner GbR
(86) Internationale Anmeldenummer: PCT/EP2002/002340
(87) Internationale Veröffentlichungsnummer: WO 2003/018181

(56) Entgegenhaltungen:
- WO-A-01/94017
- US-A- 5 006 749
- PATENT ABSTRACTS OF JAPAN vol. 0134, no. 59 (E-832), 17. Oktober 1989 (1989-10-17) & JP 01 177707 A (NIPPON SEIKI CO LTD), 14. Juli 1989 (1989-07-14)
- PATENT ABSTRACTS OF JAPAN vol. 1997, no. 10, 31. Oktober 1997 (1997-10-31) & JP 09 162670 A (TOYO COMMUN EQUIP CO LTD), 20. Juni 1997 (1997-06-20)
- PATENT ABSTRACTS OF JAPAN vol. 0660, no. 47 (E-099), 26. März 1982 (1982-03-26) & JP 56 162523 A (NIPPON DEMPA KOGYO CO LTD), 14. Dezember 1981 (1981-12-14)

## Beschreibung

Die Erfindung betrifft ein Bewegungselement zur Bewegung kleiner Flüssigkeitsmengen, eine Kartusche zur Aufnahme eines erfindungsgemäßen Bewegungselementes, ein Reaktionsgerät zur Aufnahme der Kartusche und ein Verfahren zur Erzeugung von Bewegung in kleinen Flüssigkeitsmengen.

In der chemischen, biologischen oder mikrobiologischen Analyse ist es oft notwendig, Substanzen, die in einem Flüssigkeitsfilm enthalten sind, mit anderen Substanzen, die z. B. auf einem Objektträger aufgebracht sind, in Kontakt und zur Reaktion zu bringen. So umfaßt z. B. eine schnelle Methode zur Analyse von Makromolekülen den Einsatz eines sogenannten Microarrays, in dem bekannte erste, ggf. verschiedenartige Makromoleküle an verschiedenen Stellen z. B. in einer Matrixform angeordnet sind. Diese Makromoleküle werden auch als "Sondenmoleküle" bezeichnet. Eine Flüssigkeit mit zweiten Makromolekülen ("Probenmoleküle") wird über das Microarray gespült, die mit mindestens einer Art von Sondenmolekülen auf dem Microarray eine spezifische Bindung eingehen (Hybridisierung). Wird dann die Flüssigkeit wieder von der Oberfläche entfernt, verbleiben vornehmlich nur an den Stellen der spezifischen Bindung die zu untersuchenden Probenmoleküle zurück. Mit Hilfe einer ortsaufgelösten Messung, z. B. einer Fluoreszenzmessung, läßt sich feststellen, an welchen Stellen Probenmoleküle vorhanden sind. Aus der bekannten Lage der einzelnen Sondenmoleküle in der Matrixform des Microarrays kann also festgestellt werden, mit welcher Art von Makromolekülen die zu untersuchenden Makromoleküle eine spezifische Bindung eingegangen sind.

Solche Microarrays werden z. B. zur Untersuchung von Makromolekülen wie Proteinen, Antigenen oder Antikörpern eingesetzt. Im speziellen werden Microarrays auch zur Untersuchung von DNA, z. B. beim DNA-Screening, eingesetzt.

Die Dauer eines entsprechenden Analyseexperimentes ist zu einem wesentlichen Teil durch die Diffusion der Probenmoleküle zu den Sondenmolekülen bestimmt und kann daher einige Zeit in Anspruch nehmen. Ist z. B. die Konzentration des zu untersuchenden Makromoleküles in der Flüssigkeit nur gering, so kann es sehr lange dauern, bis es seine spezifischen Bindungspartner auf dem Array gefunden hat. Wünschenswert wäre also eine Vorrichtung, mit der die Flüssigkeit durchmischt werden kann, um zu jedem Zeitpunkt eine homogene Verteilung der Makromoleküle auf dem Microarray zu erreichen.

Eine Vorrichtung, die von "Molecular Dynamics" angeboten wird, beschreibt einen Microarray-Slide-Prozessor, bei dem eine Abdeckplatte über eine umlaufende Gummidichtung auf einen Objektträger mit einem Microarray aufgelegt und verschraubt wird. Durch ein Befüllungsseptum kann der auf diese Weise vollständig abgedichtete Zwischenraum zwischen Abdeckplatte und Objektträger mit Flüssigkeit gefüllt werden. Durch einen weiteren Zugang kann der Zwischenraum mit Flüssigkeit gespült werden. Bei einer solchen Vorrichtung kommt der gesamte Objektträger mit Flüssigkeit in Berührung. Hierbei ist das Flüssigkeitsvolumen größer als bei einer händischen Versuchsdurchführung, zum einen, weil maximal die Hälfte des Objektträgers biologisch aktiv ist, und zum anderen, weil das Spülen ein nicht unerhebliches Totvolumen erfordert.

Kleine Flüssigkeitsmengen werden oftmals in mikrofluidischen Systemen manipuliert, die aus Mikrokanälen bestehen, die zur Führung, Mischung oder zur Reaktion der kleinen Flüssigkeitsmengen dienen (wie es zum Beispiel in O. Müller, Laborwelt Nr. 1/2000, Seiten 36 ff. beschrieben ist). Dabei entsteht oft das Problem, die kleinen Flüssigkeitsmengen gut zu durchmischen bzw. zu rühren. Durch unterschiedlichste Verfahren wird versucht, die vornehmlich laminare Strömung in Mikrokanälen in eine turbulente zu verwandeln. So können zum Beispiel Riffel am Rand der Kanäle oder Multifurkationen der Kanäle mit nachfolgender Wiederzusammenführung vorgesehen sein, wobei diese Einrichtungen fest installiert und nicht ansteuerbar sind.

WO 01/94017 A1, deren Anmeldetag vor dem Prioritätsdatum der europäischen Patentanmeldung des vorliegenden Textes liegt, die aber erst am 13. Dezember 2001, nach dem Prioritätsdatum der europäischen Patentanmeldung des vorliegenden Textes veröffentlicht wurde, beschreibt ein Element in Form einer Platte mit zwei Hauptflächen mit zumindest einem auf einer aktiven Hauptfläche der Platte angeordneten elektrisch ansteuerbaren Interdigitaltransducer, um eine Flüssigkeitsmenge in Bewegung zu versetzen, die in Kontakt mit der Hauptfläche ist und ein Verfahren zur Erzeugung von Bewegung in kleinen Flüssigkeitsmengen, bei dem eine kleine Flüssigkeitsmenge in Kontakt mit einer Oberfläche gebracht wird und auf der Oberfläche mit zumindest einer Oberflächenschallwelle in Wechselwirkung gebracht wird.

Aufgabe der vorliegenden Erfindung ist es, Einrichtungen anzugeben, die eine effektive und einfache Durchmischung von Flüssigkeitsmengen bzw. der darin enthaltenen Substanzen auf bzw. in einem Trägermaterial erlauben. Die Einrichtungen sollen kostengünstig und einfach handhabbar sein.

Diese Aufgabe wird mit einem Bewegungselement mit den Merkmalen des Anspruches 1, einer Kartusche für ein Bewegungselement mit den Merkmalen des Anspruches 20, einem Reaktionsgerät mit den Merkmalen des Anspruches 28, einem System nach Anspruch 30 bzw. einem Verfahren mit den Merkmalen des Anspruches 16 gelöst.

Das erfindungsgemäße Bewegungselement zur Erzeugung von Bewegung in kleinen Flüssigkeitsmengen umfaßt eine Platte mit zwei Hauptflächen, von denen eine eine aktive Hauptfläche darstellt. Auf dieser aktiven Hauptfläche befindet sich zumindest eine Bewegungsvorrichtung, die elektrisch ansteuerbar ist, um eine Flüssigkeit, die im Kontakt mit der aktiven Hauptfläche ist, in Bewegung zu versetzen. Weiterhin umfaßt das Bewegungselement elektrische Kontaktelemente zur Kontaktierung der Bewegungsvorrichtung.

Die elektrischen Kontaktelemente können dabei entweder zur direkten physischen Kontaktierung mit elektrischen Zuführungen ausgestaltet sein oder als Antenneneinrichtungen zur Aufnahme eines entsprechend eingestrahlten Wechselfeldes zur drahtlosen Steuerung.

Der Begriff "Flüssigkeit" umfaßt im vorliegenden Text unter anderem reine Flüssigkeiten, Mischungen, Dispersionen und Suspensionen sowie Flüssigkeiten, in denen sich feste Teilchen, z. B. biologisches Material, befinden.

Mit einem solchen Bewegungselement kann eine Flüssigkeit, die sich auf einem Träger wie z. B. einem Objektträger befindet, berührt werden. Elektrische Ansteuerung der Bewegungsvorrichtung erzeugt Bewegung in der Flüssigkeit, die wiederum eine effektive und homogene Verteilung und/oder Durchmischung der Flüssigkeit bzw. der darin enthaltenen Substanzen hervorruft. Aufgrund der Plattenform ist ein erfindungsgemäßes Bewegungselement einfach handzuhaben und kann über entsprechende Abstandshalter einfach auf den Träger aufgelegt werden.

Das erfindungsgemäße Bewegungselement kann ebenso wie die anderen erfindungsgemäßen Vorrichtungen und das erfindungsgemäße Verfahren eingesetzt werden, um eine Flüssigkeit zu durchmischen, mehrere Flüssigkeiten miteinander zu vermischen und/oder eine Strömung in einer kleinen Flüssigkeitsmenge zu erzeugen.

Weiterhin kann das erfindungsgemäße Bewegungselement z. B. mit konventionellen Mikrofluidikbauteilen eingesetzt werden. Dabei wird das erfindungsgemäße Bewegungselement mit der aktiven Seite auf das gesamte oder einen Teil des konventionellen Mikrofluidikbauelementes gelegt, so daß Flüssigkeit, die sich in dem darunter befindlichen Bereich des Mikrofluidikbauelementes befindet, mit Hilfe der Bewegungsvorrichtung durchmischt werden kann. Auf diese Weise kann das erfindungsgemäße Bewegungselement mit allen denkbaren konventionellen fluidischen Systemen aus Plastik, Silizium, Glas etc. eingesetzt werden.

Das Bewegungselement umfaßt als Bewegungsvorrichtung zumindest eine Oberflächenschallwellenerzeugungseinrichtung. Eine Oberflächenschallwelle ermöglicht durch Impulsübertrag entweder durch die mechanische Deformierung der Oberfläche oder durch Wechselwirkung der sie begleitenden elektrischen Felder mit geladener oder polarisierter Materie in der Flüssigkeit die Erzeugung einer Kraftwirkung auf die Flüssigkeit bzw. auf darin enthaltene Bestandteile. Auf diese Weise wird eine effektive Bewegung und/oder Durchmischung der Flüssigkeit erreicht, die die Verteilung der Flüssigkeit unterstützt.

Vorteilhaft ist insbesondere, wenn verschiedene Oberflächenwellenerzeugungseinrichtung lateral versetzt zueinander angeordnet sind. Damit kann ein nicht-stationäres Strömungsbild erreicht werden, wenn die verschiedenen Oberflächenschallwellenerzeugungseinrichtungen nach einem geeigneten Programm nacheinander zur Erzeugung von Oberflächenschallwellen angeregt werden. Dies ist insbesondere deswegen vorteilhaft, da bei kleinen Flüssigkeitsmengen die Strömung in der Regel laminar ist und sich so bei nur einer Oberflächenschallwellenerzeugungseinrichtung ein stabiles Strömungsmuster einstellen würde. Ein nicht-stationäres Strömungsbild verbessert die Durchmischung bzw. Verteilung von suspensierter Materie bzw. in der Flüssigkeit befindlichen Makromolekülen.

Zur Erzeugung von Oberflächenschallwellen wird vorteilhafterweise ein piezoelektrisches Substrat bzw. ein Substrat mit einer piezoelektrischen Oberfläche eingesetzt. Das piezoelektrische Substrat kann z. B. aus Lithiumniobat oder Quarz gefertigt sein oder eine piezoelektrische Beschichtung, z. B. aus Zinkoxid, umfassen. Auf dem piezoelektrischen Substrat befindet sich vorteilhafterweise als Oberflächenschallwellenerzeugungseinrichtung zumindest ein Interdigitaltransducer, wie er aus der Oberflächenwellenfiltertechnologie bekannt ist. Ein Interdigitaltransducer umfaßt in einfachster Ausführung zwei Elektroden mit fingerartig ineinander greifenden Fortsätzen. Derartige Interdigitalwandler sind z. B. in R.M. White und F.W. Voltmer, Applied Physics Letters 7, Seiten 314ff. (1965) beschrieben. Anlegen eines elektrischen Wechselfeldes an die beiden Elektroden erzeugt auf einer piezoelektrischen Oberfläche eine Oberflächenschallwelle, wenn die Resonanzbedingung erfüllt ist, daß die Frequenz dem Quotienten aus Oberflächenschallgeschwindigkeit des verwendeten Materiales und dem Fingerabstand des Interdigitaltransducers entspricht. Typischerweise eingesetzte Frequenzen liegen im Bereich von einigen 10 bis einigen 100 MHz. Mit Hilfe eines Interdigitaltransducers läßt sich auf sehr einfache Weise eine definierte Oberflächenschallwelle erzeugen. Die Herstellung des Interdigitaltransducers auf dem piezoelektrischen Substrat ist mit bekannten lithographischen Verfahren und Beschichtungstechnologien kostengünstig und einfach.

Zur Erzeugung von nicht-stationären Strömungsbildem eignet sich bei einer Ausführungsform mit Interdigitaltransducern eine Anordnung mit räumlich auf dem Substrat getrennt angeordneten Interdigitaltransducern unterschiedlicher Resonanzfrequenz. Diese Transducer können parallel geschaltet werden und benötigen auf diese Weise insgesamt nur zwei elektrische Anschlüsse. Die Ansteuerung einzelner Transducer kann durch einen Frequenzwechsel der angelegten Wechselspannung erfolgen. Die Ansteuerung verschiedener Transducer führt zu jeweils charakteristischen Strömungsmustem, wobei als Parameter die Frequenz, das Puls-Pausenverhältnis, die Intensität und die Zeit möglich sind. Die Ansteuerung kann über elektrischen Kontakt oder aber durch drahtlose Einstrahlung eines entsprechenden Wechselfeldes erreicht werden.

Da die Bewegungsvorrichtung in einer Vertiefung der aktiven Fläche vorgesehen ist, so daß die Oberflächenschaliwellenerzeugungseinrichtung und die aktive Fläche in einer Ebene liegen, ist eine optimale Übertragung des Impulses der Oberflächenschallwelle auf die Flüssigkeit gewährleistet, die sich mit der aktiven Hauptfläche und der Oberflächenschallwellenerzeugungseinrichtung in Kontakt befindet.

Die Bewegungsvorrichtung kann auf der aktiven Hauptfläche des Bewegungselementes z. B. aufgeklebt sein.

Das Einbringen der Bewegungsvorrichtung in die Vertiefung kann vorteilhafterweise mit einem Prozeß des kapillaren Klebens erreicht werden. Die Bewegungsvorrichtung bzw. das entsprechende Substrat wird in die Vertiefung eingelegt, die um weniges größer dimensioniert ist als die Bewegungsvorrichtung selbst. In den Spalt wird flüssiger Kleber eingebracht, der sich aufgrund der Kapillarwirkung in dem Spalt gleichmäßig verteilt und diesen fugenfrei ausfüllt.

Bei einer vorteilhaften Ausführungsform ist zusätzlich in der aktiven Hauptfläche eine Aufnahmevertiefung vorgesehen, in die ein Objektträger eingelegt werden kann. Die Maße dieser Aufnahmevertiefung erlauben vorteilhafterweise die Aufnahme eines herkömmlichen Glasobjektträgers. Insbesondere ist die Höhe dieser Aufnahmevertiefung an die Dicke eines konventionellen Objektträgers angepaßt. In diese Aufnahmevertiefung kann ein Objektträger eingelegt werden, auf dem sich z. B. eine Funktionalisierung in Form eines Microarrays befindet. Auf die aktive Hauptfläche des Bewegungselementes wird dann eine Flüssigkeit aufgebracht, die sich auf der aktiven Hauptfläche verteilt und somit den Objektträger und die Bewegungsvorrichtung berührt. Ansteuern der Bewegungsvorrichtung, z. B. Anlegen einer Wechselspannung an einen Interdigitaltransducer einer Ausführungsform der Bewegungsvorrichtung, erzeugt eine Bewegung in der Flüssigkeit. Diese Bewegung wirkt durch die gesamte Flüssigkeit auch auf den Teil der Flüssigkeit, der sich auf dem Objektträger befindet und führt so zu einer effektiven Durchmischung und Verteilung der Flüssigkeit auf dem Objektträger.

Es kann bei einer Ausführungsform mit Oberflächenschallwellenerzeugungseinrichtung vorteilhaft sein, wenn die Fläche, auf der sich auch die Oberflächenschallwellenerzeugungseinrichtung befindet, mit Löchern, vorzugsweise glattwandigen Sackbohrungen, versehen ist. Derartige Löcher müssen so dimensioniert sein, daß sie von der Flüssigkeit aufgrund ihrer Oberflächenspannung und des sich bildenden Luftpolsters nicht gefüllt werden. Ein effektives Durchmischen mit Hilfe von Oberflächenschallwellen wird durch derartige Löcher jedoch begünstigt.

Eine besonders gute Handhabbarkeit ist gewährleistet, wenn der plattenförmige Träger kartenförmig ausgestaltet ist, z. B. kann er auch Ausmaße haben, die einem konventionellen Objektträger vergleichbar sind. Derartige Karten lassen sich gut handhaben und sind einfach und kostengünstig herstellbar. Mögliche Maße sind entsprechend einem konventionellen Objektträger z. B. etwa 25x75 mm.

Die kartenförmige Ausgestaltung ist robust und dient dem Schutz der empfindlicheren Bewegungsvorrichtung. Die Karte ist leicht anzufassen und unkritisch bei der Behandlung sowie kostengünstiger als der Einsatz rein kristalliner Substrate.

Bei einer besonderen Ausgestaltung des erfindungsgemäßen Bewegungselementes ist eine Durchgangsbohrung vorgesehen, die die aktive Hauptfläche mit der zweiten Hauptfläche verbindet. Eine solche Ausführungsform kann besonders vorteilhaft eingesetzt werden, um einen dünnen Flüssigkeitsfilm zwischen einem Träger und dem Bewegungselement zu erzeugen. Zwischen Träger und Bewegungselement werden ggf. Abstandshalter angeordnet, die entweder separat ausgestaltet sind, oder mit dem Träger oder dem Bewegungselement einstückig geformt sind. Zwischen Träger und Bewegungselement entsteht ein Spalt. Die aktive Fläche des Bewegungselementes weist in Richtung des Trägers. Durch die Durchgangsöffnung kann jetzt z. B. mit Hilfe einer Pipette oder einem Dispenser eine Flüssigkeit in diesen Spalt eingebracht werden. Der Spalt kann so dimensioniert sein, daß sich die Flüssigkeit aufgrund der Kapillarkräfte zwischen dem Träger und dem Bewegungselement selbstständig ausbreitet. Eine präzise und einfache Befüllung des Raumes zwischen Träger und Bewegungselement ist so gewährleistet. Ist die Durchgangsöffnung trichterförmig ausgestaltet, ist die Befüllung noch vereinfacht.

Eine Weiterbildung des erfindungsgemäßen Bewegungselementes umfaßt eine Schutzbeschichtung auf der Bewegungsvorrichtung oder dem gesamten Bewegungselement, um den direkten Kontakt mit der Bewegungsvorrichtung und der zu behandelnden Flüssigkeit zu vermeiden. Bei biologischen Anwendungen ist hier eine biokompatible Beschichtung, z. B. Quarz, vorteilhaft. Bei einer Ausführungsform mit einer Oberflächenschallwellenerzeugungseinrichtung muß die Schutzbeschichtung ausreichend dünn sein, daß die Oberflächenschallwellen durch sie nicht behindert werden und eine Übertragung des Impulses auf die Flüssigkeit möglich ist.

Vorteilhafterweise ist das Bewegungselement transparent ausgestaltet, um die Ausbreitung der Flüssigkeit beobachten zu können. Auch optische Untersuchungen an der Flüssigkeit oder an den Reaktionsprodukten der Flüssigkeit, die sich im Kontakt mit dem Bewegungselement befindet, können durch ein transparentes Bewegungselement hindurch gut durchgeführt werden. Vorzugsweise besteht das Bewegungselement aus Kunststoff, z. B. Polycarbonat, Polymethylmethacrylat (PMMA) oder Polyethylenterephtalat (PET). Kunststoff ist kostengünstig und leicht zu bearbeiten. Eine einfache Herstellung ist z. B. mit einem Spritzgußverfahren oder mit Hilfe eines Fräsplotters möglich.

Die Bewegungsvorrichtung kann fest mit der aktiven Hauptfläche des Bewegungselementes z. B. wie oben beschrieben durch eine Klebung verbunden sein. Eine lösbare Verbindung, z. B. eine Klemmverbindung, bietet je nach Anforderungsprofil die einfache Möglichkeit, defekte Bewegungsvorrichtungen leichter austauschen zu können.

Bei einer anderen Ausführungsform des erfindungsgemäßen Bewegungselementes sind auf der aktiven Hauptfläche der Platte mehrere Bewegungsvorrichtungen in regelmäßiger Anordnung in Matrixform vorgesehen. Das Rastermaß dieser Matrix entspricht vorteilhafterweise dem Rastermaß einer konventionellen Mikro-Titerplatte. Eine solche Ausführungsform kann vorteilhaft eingesetzt werden, um Flüssigkeitsproben, die in den Vertiefungen einer konventionellen Mikro-Titerplatte sind, gleichzeitig zu durchmischen. Dazu wird das erfindungsgemäße Bewegungselement dieser Ausführungsform mit den Bewegungsvorrichtungen auf die Mikro-Titerplatte aufgelegt und die Bewegungsvorrichtungen zur Erzeugung von Bewegung in der Flüssigkeit angesteuert. Bei einer Ausführungsform, bei der die Bewegungsvorrichtungen Interdigitaltransducer umfassen, werden diese z. B. mit einer Wechselspannung der Resonanzfrequenz der jeweiligen Interdigitaltransducer angeregt.

Diese Ausführungsform kann also eingesetzt werden, um parallel einzelne Flüssigkeitsmengen auf einer Mikrotiterplatte in Bewegung zu versetzen bzw. zu rühren, um Reaktionen der Flüssigkeitsmengen in den einzelnen Aufnahmen der Mikrotiterplatte zu homogenisieren und zu beschleunigen.

Eine Bewegungsvorrichtung zur Erzeugung von Bewegung in Flüssigkeiten, die mit dem erfindungsgemäßen Bewegungselement einsetzbar ist umfaßt beispielsweise ein piezoelektrisches Substrat bzw. ein Substrat mit einer piezoelektrischen Beschichtung. Vorzugsweise umfaßt die Oberflächenschallwellenerzeugungseinrichtung der Bewegungsvorrichtung einen interdigitaltransducer, wie er bereits oben beschrieben ist, der ggf. mit einer Schutzbeschichtung abgedeckt ist.

Eine bevorzugte Ausführungsform der Bewegungsvorrichtung umfaßt mehrere lateral gegeneinander versetzt angeordnete Oberflächenschaltwellenerzeugungseinrichtungen, vorzugsweise mehrere Interdigitaltransducer unterschiedlicher Resonanzfrequenz. Eine solche Ausführungsform bietet die oben bereits mit Bezug zu der entsprechenden Ausführungsform des erfindungsgemäßen Bewegungselementes beschriebenen Vorteile.

Die Bewegungsvorrichtung kann auch unabhängig vom erfindungsgemäßen Bewegungselement z. B. in einem aus Mikrokanälen bestehenden mikrofluidischen System eingesetzt werden, um Flüssigkeiten, die sich darin bewegen, anzutreiben bzw. zu durchmischen. Die Bewegungsvorrichtung kann dabei z. B. parallel, senkrecht oder schräg zu einer Bewegungsrichtung der Flüssigkeit in dem mikrofluidischen System und sowohl an den Wänden, dem oberen Abschluß als auch am Boden des mikrofluidischen Systems angeordnet sein. Die Bewegungsvorrichtung kann dabei als integraler Bestandteil des mikrofluidischen Systems ausgestaltet sein, d.h. mit diesem fest verbunden und installiert sein.

Bei einer anderen Anwendung einer Bewegungsvorrichtung ist diese kein integraler Bestandteil eines mikrofluidischen Systems, sondern ist lose ausgestaltet. Eine solche lose Bewegungsvorrichtung kann individuell an verschiedenen Stellen z. B. eines mikrofluidischen Systems, eines Mikroanalyse- oder Mikroreaktionssystems eingesetzt werden. Zum gewünschten Zeitpunkt kann an der gewünschten Stelle die Bewegungsvorrichtung mit der Flüssigkeit in dem System in Kontakt gebracht werden, z. B. durch Eintauchen. Ansteuern der Bewegungsvorrichtung mit einem Hochfrequenzsignal erzeugt eine Oberflächenschallwelle, die sich auf die Flüssigkeit überträgt und so im beschriebenen Sinne zum Durchmischen, Rühren bzw. Bewegen der Flüssigkeit führt. Die Einkopplung des Hochfrequenzsignales kann drahtlos geschehen oder über Kontaktzuführungen, die auch zum Halten der losen Bewegungsvorrichtung dienen können. Eine solche lose Bewegungsvorrichtung kann z. B. auch in Form eines Mischersticks aufgebaut sein. Dabei ist die Bewegungsvorrichtung an einem Träger befestigt, der z. B. in die Flüssigkeit innerhalb eines mikrofluidischen Systems eingetaucht werden kann. Der Träger kann z. B. eine entsprechend dimensionierte Nadel sein, deren Bewegung robotergesteuert sein kann.

Bei einem erfindungsgemäßen Verfahren zur Erzeugung von Bewegung in kleinen Flüssigkeitsmengen wird eine kleine Flüssigkeitsmenge in Kontakt mit einer Oberfläche gebracht, auf der sie mit zumindest einer Oberflächenschallwelle in Wechselwirkung gebracht wird. Die Wechselwirkung mit der Oberflächenschallwelle erzeugt durch den Impulsübertrag der Oberflächenschallwelle auf die Flüssigkeit bzw. darin enthaltene Bestandteile eine effektive Bewegung, Durchmischung bzw. Verteilung der Flüssigkeit.

Das erfindungsgemäße Verfahren kann z. B. mit einem erfindungsgemäßen Bewegungselement mit darauf bzw. daran befindlichen Bewegungsvorrichtungen durchgeführt werden.

Eine vorteilhafte Ausgestaltung des Verfahrens sieht vor, daß die Flüssigkeitsmenge zu unterschiedlichen Zeitpunkten mit Oberflächenschallwellen an verschiedenen Orten wechselwirkt. Ein solches vorteilhaftes Verfahren kann z. B. mit einem Bewegungselement mit einer Bewegungsvorrichtung erreicht werden, die mehrere Oberflächenschallwellenerzeugungseinrichtungen lateral gegeneinander versetzt aufweist. Ansteuerung der einzelnen Oberflächenschalfwellenerzeugungseinrichtungen nach einem vorbestimmten Programm erzeugt ein charakteristisches zeitlich wechselndes Strömungsbild, mit dem z. B. die Ausbildung einer stabilen Strömung verhindert werden kann.

Eine erfindungsgemäße Kartusche zur Aufnahme eines erfindungsgemäßen Bewegungselementes weist einen Aufnahmeraum für einen Träger auf, auf dem eine Flüssigkeit aufgebracht werden kann. Die erfindungsgemäße Kartusche weist weiterhin einen zweiten Aufnahmeraum auf, in dem das erfindungsgemäße Bewegungselement aufgenommen werden kann, und zwar derart, daß die Bewegungsvorrichtung des erfindungsgemäßen Bewegungselementes mit einer Flüssigkeit in Kontakt kommen kann, die sich auf dem Träger im ersten Aufnahmeraum befindet. Weiterhin weist die erfindungsgemäße Kartusche Einrichtungen zur Durchführung der elektrischen Kontaktierung der Bewegungsvorrichtung auf dem erfindungsgemäßen Bewegungselement auf. In eine solche Kartusche wird ein Träger eingelegt, auf dem sich eine Flüssigkeit befindet, bzw. auf den eine Flüssigkeit aufgebracht wird. In den zweiten Aufnahmeraum wird ein erfindungsgemäßes Bewegungselement eingebracht. Je nach Ausführungsform ist es möglich, den Träger und das Bewegungselement durch entsprechend dimensionierte Abstandshalter voneinander zu trennen. Die Kartusche kann jedoch auch entsprechende Einrichtungen aufweisen, die einen gewünschten Abstand aufrechterhalten. An die zumindest eine Bewegungsvorrichtung des erfindungsgemäßen Bewegungselementes wird über die elektrischen Kontakte eine elektrische Versorgung angelegt, die die Bewegungsvorrichtungen aktiviert. Die Bewegungsvonichtungen setzen die Flüssigkeit in Bewegung und ermöglichen so eine effektive Verteilung bzw. Durchmischung. Die Kartusche ermöglicht ein einfaches und sicheres Handhaben.

Die Einrichtungen zur elektrischen Kontaktierung können metallische Verbindungen sein, die derart in der Kartusche angeordnet sind, daß eine Bewegungsvorrichtung auf einem erfindungsgemäßen Bewegungselement, das in den zweiten Aufnahmeraum der Kartusche eingebracht wird, mit diesen metallischen Verbindungen in Kontakt kommt. Die metallischen Verbindungen sind bei einer solchen Ausführungsform derart ausgestaltet, daß sie von außerhalb der Kartusche kontaktierbar sind, um eine elektrische Versorgung anzulegen. Bei einer besonders einfachen Ausführungsform bestehen die Einrichtungen zur elektrischen Kontaktierung aus Durchgangsöffnungen für externe elektrische Verbindungen. Bei in der Kartusche eingelegtem Bewegungselement können so deren Bewegungsvorrichtungen von außen mit metallischen Kontakten in Verbindung gebracht werden, um eine elektrische Versorgung der Bewegungsvorrichtungen sicherzustellen.

Eine besondere Weiterbildung der erfindungsgemäßen Kartusche weist einen Deckel auf, mit dessen Hilfe die Aufnahmeräume verschlossen werden können, um einen abgeschlossenen Raum zu erzeugen und/oder das Bewegungselement in der Kartusche zu fixieren. Durch den Abschluß mit einem Deckel werden außerdem definierte Versuchsbedingungen erzeugt. Zusätzlich kann z. B. ein Reservoir vorgesehen sein, in dem sich während des Betriebes Flüssigkeit befindet, um in dem durch den Deckel abgeschlossenen Raum eine konstante Luftfeuchtigkeit aufrecht zu erhalten.

Besonders vorteilhafterweise ist ein Federelement vorgesehen, das das Bewegungselement ggf. über Abstandshalter gegen den Träger mit der Flüssigkeit fixieren kann. Eine einfache Ausgestaltung umfaßt eine Federplatte im Deckel der Kartusche, die beim Schließen des Deckels das Bewegungselement in Richtung des Trägers drückt. Eine besondere Fixierung z. B. mit Schrauben ist nicht notwendig.

Selbstverständlich kann eine Kartusche auch mehrere Aufnahmemöglichkeiten jeweils für Träger, Flüssigkeiten und Bewegungselemente umfassen, die z. B. mit einem Deckel abgeschlossen werden.

Im Zwischenraum zwischen dem Träger und dem Bewegungselement kann sich die Flüssigkeit z. B. aufgrund der Kapillarwirkung ausbreiten, ohne daß sich Luftblasen bilden. Die effektive Verteilung/Durchmischung wird dann mit Hilfe des Bewegungselementes durchgeführt bzw. unterstützt.

In der Kartusche kann eine Heizeinrichtung, z. B. eine Widerstandheizung, vorgesehen sein, die während der Verteilung bzw. Durchmischung der Flüssigkeit zur Erwärmung derselben eingesetzt werden kann, um z. B. eine Reaktion zu fördern.

Eine besondere Ausführungsform einer Kartusche mit Heizeinrichtung umfaßt eine Heizplatte, die die Übertragung von extern an die Kartusche applizierter Wärme zu dem Träger bzw. darauf befindlicher Flüssigkeit gewährleistet. Eine solche Heizplatte ist vorzugsweise aus gut wärmeleitendem Metall gefertigt.

Um die Temperatur in den Aufnahmeräumen bzw. die Temperatur der eingebrachten Flüssigkeitsmenge bestimmen zu können, kann in der Kartusche ein Thermometerelement vorgesehen sein.

Bei einer abweichenden Ausführungsform kann das Bewegungselement im bzw. am Deckel der Kartusche befestigt sein, so daß es beim Schließen des Deckels der Kartusche mit einer bzw. mehreren kleinen Flüssigkeitsmengen auf dem Träger im ersten Aufnahmeraum in Kontakt kommt, um diese in Bewegung zu versetzen.

Eine erfindungsgemäße Kartusche kann auch zur Aufnahme einer konventionellen Mikrotiterplatte dimensioniert sein, so daß mehrere Flüssigkeitsmengen parallel in den einzelnen Aufnahmen der Mikrotiterplatte bewegt werden können.

Ein erfindungsgemäßes Reaktionsgerät dient zur Aufnahme einer erfindungsgemäßen Kartusche. Weiterhin sind Kontaktelemente vorgesehen, die derart angeordnet sind, daß sie ein erfindungsgemäßes Bewegungselement, das sich in einer Kartusche befindet, die in dem Kartuschenaufnahmeraum aufgenommen ist, elektrisch kontaktieren kann. Das erfindungsgemäße Reaktionsgerät weist weiterhin eine Wechselspannungserzeugungseinrichtung zur Erzeugung einer Wechselspannung auf, die über die Kontaktelemente an ein solches Bewegungselement angelegt werden kann.

Der Kartuschenaufnahmeraum muß dabei nicht notwendigerweise eine Vertiefung zur Aufnahme der Kartusche umfassen, sondern kann auch durch entsprechende Befestigungsmittel, z. B. Klemmeinrichtungen, gebildet sein.

Soll eine Kartusche zum Einsatz kommen, die Durchgangslöcher zur Kontaktierung eines Bewegungselementes aufweist, sind die Kontaktelemente des Reaktionsgerätes entsprechende elektrische Verbindungspins, die bei aufgenommener Kartusche durch diese Durchgangslöcher hindurch greifen, um das Bewegungselement mit der Bewegungsvorrichtung elektrisch zu kontaktieren. Die Wechselspannungserzeugungseinrichtung dient zur Erzeugung einer Wechselspannung, die z. B. bei einer Bewegungsvorrichtung mit einem Interdigitaltransducer zur Erzeugung von Oberflächenschallwellen die entsprechende Wechselspannung zur Verfügung stellt, die zur Erzeugung der Oberflächenschallwellen dient.

Um die Kartusche in dem Kartuschenaufnahmeraum festzuhalten, sind bei einer vorteilhaften Ausführungsform entsprechende Verschlüsse bzw. Klemmvorrichtungen vorgesehen.

Eingabemittel können vorgesehen sein, die zur Auswahl der entsprechenden Parameter dienen. Zur Steuerung der einzelnen Komponenten des Reaktionsgerätes ist vorteilhafterweise ein Mikroprozessor vorgesehen, der ggf. mit der Eingabeeinrichtung, den Anzeigemitteln, der Wechselspannungserzeugungseinrichtung verbunden ist. Schließlich kann ein erfindungsgemäßes Reaktionsgerät eine Schnittstelle zum externen Auslesen bzw. Steuern z. B. mit Hilfe eines Computers aufweisen. Über eine solche Schnittstelle bzw. mit Hilfe eines integrierten Mikroprozessors kann bei Verwendung eines Bewegungselementes mit einer Bewegungsvorrichtung mit mehreren Oberflächenschallwellenerzeugungseinrichtungen, z. B. Interdigitaltransducern, auch das Durchlaufen eines vorbestimmten Programmes gesteuert werden, nach dem die einzelnen Interdigitaltransducer in festgelegtem zeitlichen Ablauf angesteuert werden, um eine Flüssigkeitsmenge mit einem charakteristischen, nicht-stationären Strömungsmuster zu belegen, das eine laminare oder stabile Strömung verhindert. Gegebenenfalls kann mit Hilfe des Mikroprozessors oder über die Schnittstelle auch ein Thermometer ausgelesen und/oder eine Heizeinrichtung angesteuert werden, um eine Temperaturkontrolle zu ermöglichen.

Eine Ausführungsform des erfindungsgemäßen Reaktionsgerätes umfaßt Anzeigemittel, auf denen die eingestellten Parameter angezeigt werden können.

Selbstverständlich kann ein erfindungsgemäßes Reaktionsgerät auch mehrere Aufnahmeräume für mehrere Kartuschen umfassen, die ggf. von einer Steuereinheit angesprochen werden können.

In dem Kartuschenaufnahmeraum kann eine Heizeinrichtung, z. B. eine Widerstandsheizung, vorgesehen sein, die über eine eingebrachte Kartusche eine darin befindliche Flüssigkeit erwärmen kann, um z. B. eine Reaktion zu unterstützen. Auch diese Heizung kann selbstverständlich durch eine ggf. vorhandene Steuereinrichtung mit angesteuert werden. Eine solche Heizeinrichtung wechselwirkt vorteilhafterweise mit einer Heizplatte, die bei einer besonderen Ausführungsform der Kartusche vorgesehen ist. Wird eine erfindungsgemäße Kartusche eingesetzt, die über eine eigene Heizung, z. B. eine Widerstandsheizung, verfügt, so sind in dem erfindungsgemäßen Reaktionsgerät Anschlüsse vorgesehen, die bei eingelegter Kartusche eine elektrische Versorgung der Kartuschenheizung ermöglichen.

Ein erfindungsgemäßes Reaktionsgerät ermöglicht durch eine einfache Handhabung und Steuerung eine Reaktion, wie sie z. B. bei Reihenuntersuchungen verschiedener Reagenzien vorteilhaft ist. Eine sichere und einfache Handhabung beschleunigt die entsprechenden Verfahren.

Mit den erfindungsgemäßen Einrichtungen ist es z. B. möglich, Untersuchungen bzw. Identifizierungen von Makromolekülen in Flüssigkeiten durchzuführen. Dazu wird z. B. ein Träger eingesetzt, auf dem bereits Spots mit Makromolekülen in bekannter Anordnung aufgebracht sind oder mit einem Pipettierroboter, Dispenser oder Spotter aufgebracht werden. Ein solcher Träger wird in den ersten Aufnahmeraum einer erfindungsgemäßen Kartusche eingebracht. Gegebenenfalls werden dann auf den Träger Abstandshalter aufgelegt. In den zweiten Aufnahmeraum der erfindungsgemäßen Kartusche wird ein erfindungsgemäßes Bewegungselement derart aufgebracht, daß die Bewegungsvorrichtung, also z. B. der Interdigitaltransducer, in Richtung des Trägers weist. Zwischen den Träger und das Bewegungselement wird eine Flüssigkeit eingebracht. Die Kartusche wird geschlossen und in das erfindungsgemäße Reaktionsgerät eingesetzt. Über die Steuerung des erfindungsgemäßen Reaktionsgerätes wird nun die Bewegungsvorrichtung aktiviert, z. B. eine entsprechende Wechselspannung an einen Interdigitaltransducer angelegt. Bei einer Ausführungsform mit mehreren Oberflächenschallwellenerzeugungseinrichtungen auf einer Bewegungsvorrichtung werden diese nach einem vorbestimmten Programm angesteuert, um ein nicht-stationäres Strömungsmuster in der Flüssigkeit zu erzeugen. Die Flüssigkeit, in der sich die zu untersuchenden Makromoleküle befinden, verteilt sich effektiv und schnell durch die Bewegung, die durch die Bewegungsvorrichtung hervorgerufen wird. Die in der Flüssigkeit befindlichen Makromoleküle und die Makromoleküle, die sich auf dem Träger befinden, gehen ggf. eine Hybridisierungsreaktion ein. Im Anschluß kann der Träger daraufhin untersucht werden, an welchen Stellen welche Makromoleküle mit den Makromolekülen in der Flüssigkeit eine Verbindung eingegangen sind. Auf diese Weise kann auf die Beschaffenheit und Art der einzelnen Makromoleküle zurückgeschlossen werden. Ein solches Verfahren eignet sich z. B. für die Verwendung beim DNA-Screening.

Selbstverständlich können jedoch auch andere Reaktionen und Vorgänge untersucht werden. So kann z. B. zwischen Träger und Bewegungselement ein Gewebeschnitt eingebracht werden. Dessen Wechselwirkung mit einer Flüssigkeit, die mit dem erfindungsgemäßen Bewegungselement verteilt wird, kann dann untersucht werden.

Spezielle Ausführungsformen der erfindungsgemäßen Einrichtungen werden im folgenden mit Bezug zu den anliegenden Figuren im Detail erläutert. Die Figuren sind schematischer Natur und nicht notwendigerweise maßstabsgetreu. Dabei zeigt:
- Figur 1a: die Draufsicht auf eine Ausführungsform eines erfindungsgemäßen Bewegungselementes,
- Figur 1b: eine schematische Schnittansicht entlang der Ebene A-A der Figur 1a,
- Figur 2a: eine Ausführungsform einer Bewegungsvorrichtung eines erfindungsgemäßen Bewegungselementes in schematischer Draufsicht,
- Figur 2b: eine andere Ausführungsform einer Bewegungsvorrichtung eines erfindungsgemäßen Bewegungselementes in schematischer Draufsicht,
- Figur 3: eine seitliche Schnittansicht einer Ausführungsform einer erfindungsgemäßen Kartusche,
- Figur 4: eine Perspektivansicht einer erfindungsgemäßen Kartusche,
- Figur 5: eine Perspektivansicht eines erfindungsgemäßen Reaktionsgerätes,
- Figur 6: eine Teilschnittansicht eines erfindungsgemäßen Bewegungselementes während des Einsatzes,
- Figur 7: die Draufsicht auf eine weitere Ausführungsform eines erfindungsgemäßen Bewegungselementes,
- Figur 8: eine Teildraufsicht auf noch eine weitere Ausführungsform eines erfindungsgemäßen Bewegungselementes,
- Figur 9a: ein mikrofluidisches System zur Verwendung mit einem erfindungsgemäßen Bewegungselement, und
- Figur 9b: eine Seitenteilschnittansicht zur Verdeutlichung des Einsatzes eines erfindungsgemäßen Bewegungselementes mit einem mikrofluidischen System.

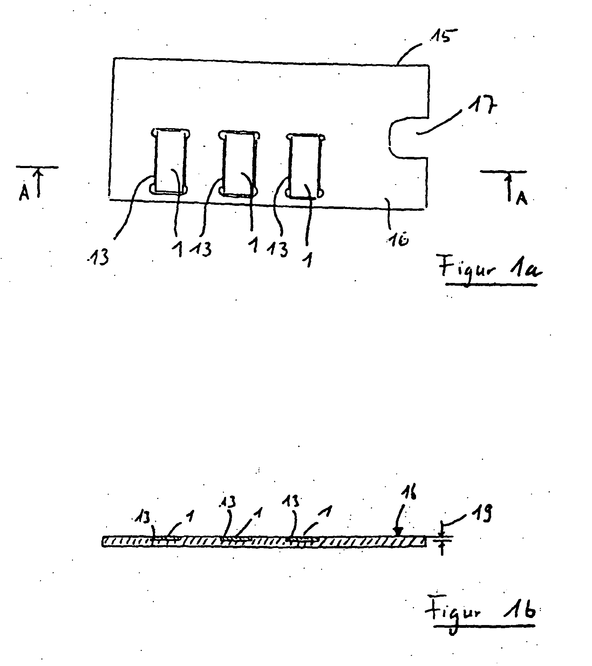

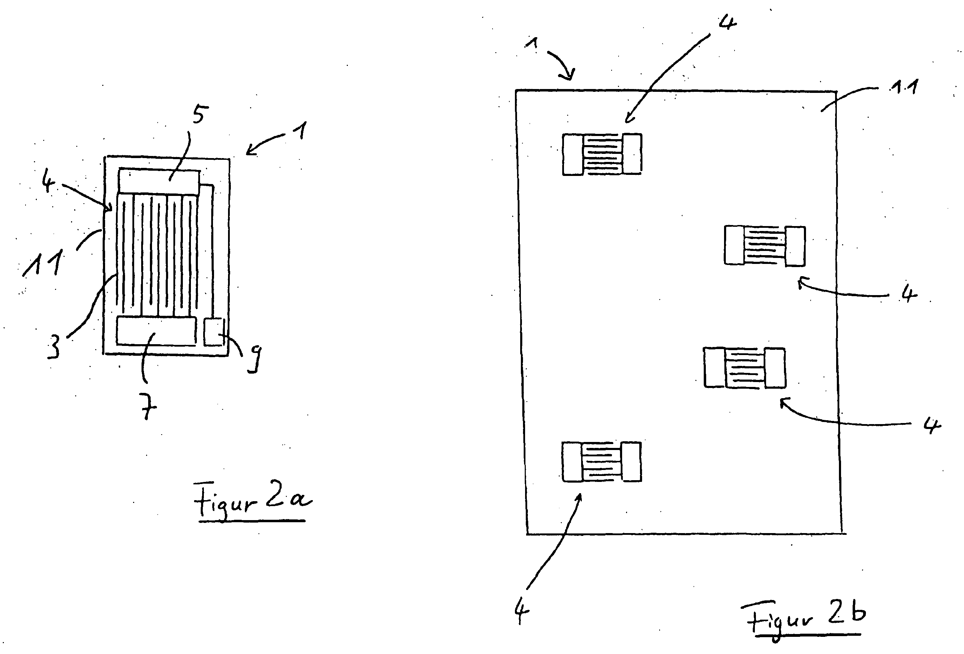

Figur 1a zeigt ein erfindungsgemäßes Bewegungselement in Draufsicht auf die aktive Fläche. Es umfaßt eine Kunststoffkarte 15 in Ausmaßen, die etwa einem konventionellen Objektträger entsprechen. Die Karte ist rechteckig mit z. B. 25 mm x 75 mm. Die Karte 15 umfaßt Aufnahmen 13 für Bewegungsvorrichtungen 1, die mit Bezug zu Figuren 2a und 2b näher erläutert werden und in Figur 1a nicht im Detail dargestellt sind. An einer Seite der Karte 15 ist eine Aussparung 17 vorgesehen, die zur erleichterten Entnahme aus einem Aufnahmeraum 33 in einer Kartusche 27 dient, wie er weiter unten beschrieben wird.

Figur 1b zeigt eine Schnittansicht etwa in der Lage A-A der Figur 1a. Mit 16 ist die in Figur 1 a gezeigte aktive Hauptfläche der Karte 15 bezeichnet Die Aufnahmen 13 für die Bewegungsvorrichtungen 1 sind Vertiefungen der Höhe 19, die derart gewählt ist, daß die Bewegungsvorrichtungen 1 etwa in der Ebene der Hauptfläche 16 abschließen.

Figur 2a zeigt eine Ausführungsform einer Bewegungsvorrichtung 1, die einen Chip 11, z. B. aus piezoelektrischem Lithiumniobat oder Quarz, umfaßt.

Die Maße der Aufnahmen 13 in dem Bewegungselement 15 sind an die Maße der aufzunehmenden Bewegungsvorrichtungen 1 angepaßt, können z. B. 8 x 16 mm bei einer Höhe von 0,5 mm sein. Die Maße des Chips 11 sind derart, daß er in einer Aufnahme 13 aufgenommen werden kann.

Auf einer Oberfläche des Chips 11 befindet sich bei der gezeigten Ausführungsform ein Interdigitaltransducer 4 einfachster Ausführung, wie er aus der Oberflächenwellenfiltertechnologie bekannt ist. Andere Ausführungen umfassen je nach Anforderung z. B. nicht-parallele oder nicht-äquidistante fingerartige Elektroden. Der Interdigitaltransducer 4 umfaßt Elektroden 5 und 7 mit fingerartigen Fortsätzen 3, die ineinander greifen. Die Darstellung ist nur schematisch. Die tatsächliche Ausführung umfaßt z. B. eine viel größere Anzahl fingerartiger Elektroden. Bei der gezeigten Ausführungsform ist die Elektrode 5 mit eine Anschlußelektrode 9 zur leichteren Kontaktierung verbunden. Anlegen eines elektrischen Wechselfeldes in der Höhe von einigen 10 bis einigen 100 MHz erzeugt eine Oberflächenschallwelle in der Oberfläche des piezoelektrischen Kristalles 11, wenn die Resonanzbedingung in etwa erfüllt ist, daß die Frequenz der Wechselspannung dem Quotienten aus Oberflächenschallgeschwindigkeit und Fingerabstand entspricht. Die Ausbreitungsrichtung der Oberflächenschallwelle ist senkrecht zu den Elektrodenfingern 3. Es sind verschiedene Interdigitaltransducergeometrien einsetzbar, wie sie aus der Oberflächenwellenfiltertechnologie bekannt sind.

Der Chip 11 der Bewegungsvorrichtung 1 ist in die Karte 15 in den Aufnahmen 13 eingefügt, z. B. eingeklemmt, so daß der Interdigitaltransducer 4 in etwa in der Ebene 16 liegt. Die Kontakte 7 und 9 sind so von außen zugänglich.

Figur 2b zeigt eine andere Ausführungsform einer erfindungsgemäßen Bewegungsvorrichtung 1. Es sind mehrere Interdigitaltransducer 4 mit unterschiedlicher Resonanzfrequenz vorgesehen. Dazu haben die einzelnen Interdigitaltransducer unterschiedlichen Fingerabstand oder unterschiedliche Geometrien, die jedoch in der nur schematischen Figur 2b nicht berücksichtigt sind. In der Übersichtlichkeit halber nicht gezeigter Weise sind die Interdigitaltransducer 4 parallel miteinander verschaltet und an zwei Anschlußelektroden angeschlossen.

Bei einer nicht gezeigten anderen Ausführungsform werden die Bewegungsvorrichtungen 1 seitlich oder von unten kontaktiert, wobei die Elektrodenkonfiguration der Interdigitaltransducer entsprechend angeordnet ist. Bei einer solchen Ausführungsform umfaßt die Karte 15 elektrische Zuführungen, die entweder an die Seite oder auf die der Hauptfläche 16 gegenüber liegende Fläche der Karte 15 geführt werden und von dort aus kontaktiert werden können. Alternativ können die Interdigitaltransducer durch Einstrahlen eines elektrischen Wechselfeldes auch drahtlos angesteuert werden. Dazu werden die Elektroden 5 und 7 in geeigneter Weise mit Empfangseinrichtungen (Antennen) verbunden, die ebenfalls auf dem Chip angeordnet sein können.

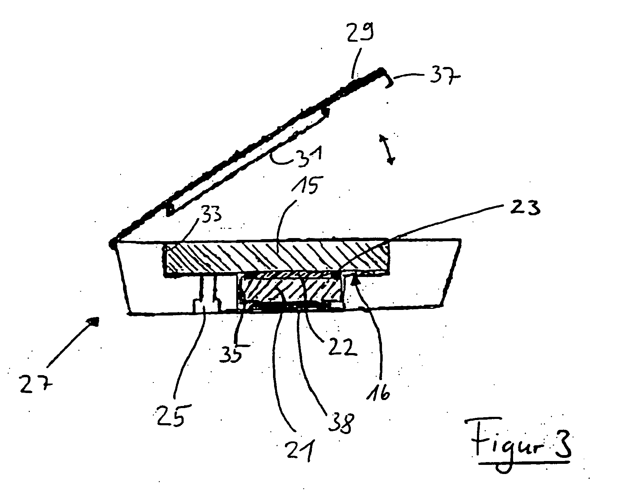

Figur 3 zeigt einen Querschnitt durch eine erfindungsgemäße Kartusche 27. Die Kartusche 27 umfaßt ein Kunststoffgehäuse mit einem ersten Aufnahmeraum 35. Dieser Aufnahmeraum dient zur Aufnahme eines Trägers 21, z. B. eines Objektträgers. Die Dimensionen des Aufnahmeraumes 35 sind an die zu verwendenden Trägerstrukturen angepaßt. Der Aufnahmeraum 35 öffnet sich in einen weiteren Aufnahmeraum 33, dessen Maße zur Aufname eines Bewegungselementes 15 ausreichen. Der Aufnahmeraum 33 ist mit der Rückseite der Kartusche durch eine Durchgangsöffnung 25 verbunden. Die Kartusche 27 verfügt über einen in angedeuteter Weise klappbaren Deckel 29 mit einer Federplatte 31. Figur 3 zeigt die Kartusche 27 mit eingelegtem Träger, eingelegtem Bewegungselement 15 und geöffnetem Deckel. Der Träger 21 liegt im Aufnahmeraum 35. Auf dem Träger befinden sich entweder einstückig oder als separate Elemente mehrere Abstandshalter 23, auf denen sich wiederum die Kunststoffkarte 15 abstützt. Diese liegt mit der aktiven Hauptfläche 16 in Richtung des Trägers 21. Schließen des gelenkig angelenkten Deckels 29 bringt die Federplatte 31 mit der Kunststoffkarte 15 in Verbindung, so daß diese gegen die Abstandshalter 23 bzw. den Träger 21 gepreßt wird. Die Durchgangslöcher 25 sind derart angeordnet, daß ein eingefügtes Bewegungselement 15 mit den Elektroden 7 und 9 der jeweiligen Bewegungsvorrichtungen 1 oberhalb der Durchgangslöcher 25, die in entsprechender Anzahl vorgesehen sind, zu liegen kommt.

38 bezeichnet eine metallische Heizplatte, die im Boden der Kartusche 27 eingelassen ist. Sie dient der Übertragung von extern an dem Boden der Kartusche applizierter Wärme auf den Träger bzw. die Flüssigkeit auf dem Träger. Nicht gezeigt ist ein Widerstandsthermometer, das in der Kartusche 27 angeordnet ist, um die Temperatur zu bestimmen.

22 bezeichnet den Zwischenraum zwischen eingelegtem Träger 21 und eingelegtem Bewegungselement 15. In dem Spalt 22 befindet sich während des Betriebes die zu bewegende Flüssigkeit.

Abweichend von der in Figur 3 gezeigten Ausführungsform kann das Bewegungselement 15 auch am Deckel 29 befestigt sein und erst durch Schließen der Kartusche in die in Figur 3 gezeigte Lage kommen.

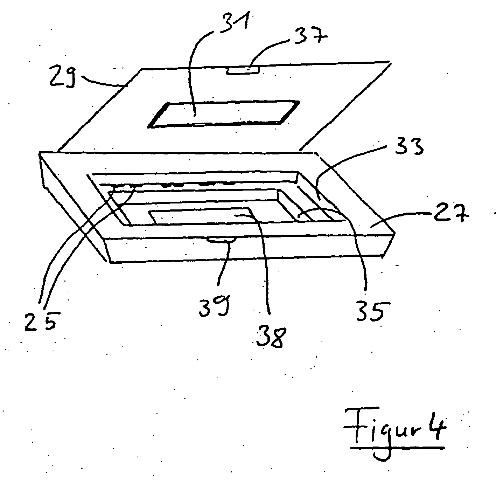

Figur 4 zeigt in perspektivischer Darstellung noch einmal die Kartusche 27, wobei auch die Verschlußklemmelemente 37 und 39 gezeigt sind, die zum Verschließen des Deckels dienen. Typische Maße für eine Kartusche sind eine Höhe von 1,5 cm und laterale Ausmaße von z. B. 14 cm x 6,5 cm. In diesen Maßen ist eine Kartusche gut zu handhaben.

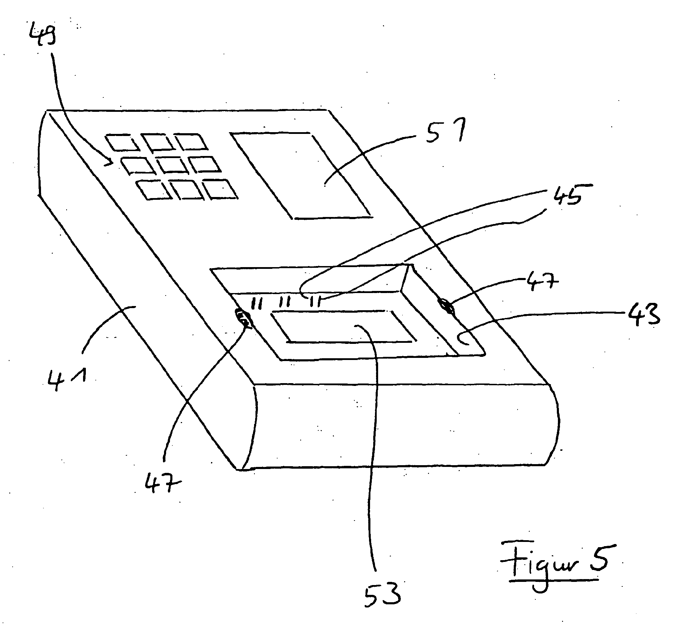

Figur 5 zeigt ein erfindungsgemäßes Reaktionsgerät. Das Reaktionsgerät weist einen Kartuschenaufnahmeraum 43 auf, der in seinen Maßen derart ausgestaltet ist, daß er eine Kartusche 27 aufnehmen bzw. festhalten kann. Dazu dienen Befestigungselemente 47, z. B. Federklemmen. Innerhalb des Kartuschenaufnahmeraumes 43 befindet sich ein Heizelement 53, z. B. eine Widerstandsheizung. Bei in den Kartuschenaufnahmeraum 43 eingelegter Kartusche 27 kommt das Widerstandselement 53 mit der Heizplatte 38 der Kartusche 27 in Kontakt und kann so an dem Widerstandselement 53 erzeugte Wärme effektiv an den Träger 21 bzw. die darauf befindliche Flüssigkeit weiterleiten.

45 bezeichnet Federstiftkontakte, die beim Einfügen der Kartusche 27 in die Durchgangslöcher 25 eingreifen. Weiterhin weist das Reaktionsgerät eine Tastatur 49 auf, über die Parameter zur Steuerung des Reaktionsgerätes eingegeben werden können. Daneben ist ein Anzeigegerät 51 sichtbar, das z. B. zum Anzeigen der gewählten Parameter dient. Das Reaktionsgerät umfaßt ein Gehäuse 41, in dem sich eine nicht sichtbare Wechselspannungserzeugungseinrichtung befindet, die zur Erzeugung von Wechselspannung der Frequenz von einigen 10 bis einigen 100 MHz geeignet ist. Diese Wechselspannungserzeugungseinrichtung versorgt die Federstiftkontakte 45 mit der entsprechenden Spannung, die bei eingelegter Kartusche 27 mit darin befindlichem Bewegungselement 15 über die Elektroden 7 und 9 den Interdigitaltransducer 4 speist. Weiterhin ist in dem Gehäuse 41 eine entsprechende Mikroprozessorsteuerung vorgesehen, die die Ansteuerung des Widerstandselementes 53, der Federstiftkontakte 45, der Anzeige 51 und der Eingabetastatur 49 übernimmt.

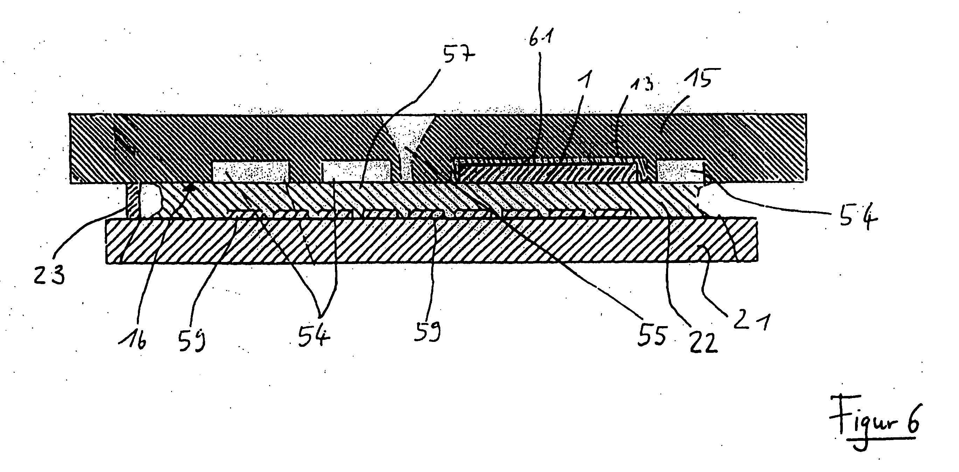

Figur 6 zeigt eine schematische Teilansicht der in eine hier nicht gezeigte Kartusche 27 eingesetzten Elemente während des Betriebes. Gezeigt ist eine Ausführungsform, bei der sich Makromoleküle in einer bekannten Anordnung von Spots 59 auf einem Träger 21 befinden. Auf dem Träger 21 stützen sich Abstandshalter 23 ab, die wiederum das Bewegungselement 15 abstützen. Gezeigt ist eine Ausführungsform mit einem trichterförmigen Durchgangsloch 55 und Sackbohrungen 54, deren laterale Ausmaße größer sind als der Abstand zwischen Träger 21 und Bewegungselement 15, der durch die Abstandshalter 23 aufrechterhalten wird. In dem Spalt 22 zwischen Bewegungselement 15 und Träger 21 befindet sich während des Betriebes eine Flüssigkeit 57, die z. B. weitere Makromoleküle enthalten kann, deren Hybridisierung mit den in den Spots 59 gebundenen Makromolekülen untersucht werden soll. Ebenfalls gezeigt ist die Bewegungsvorrichtung 1, die in der Aufnahme 13 mit dem Kleber 61 eingeklebt ist, der bündig mit der Bewegungsvorrichtung 1 und dem Bewegungselement 15 abschließt. Die Klebung wird auf einfache Weise unter Einsatz eines kapillaren Klebeverfahrens bewerkstelligt. Die Bewegungsvorrichtung 1 wird in die Aufnahme 13 eingebracht. In den Spalt zwischen Bewegungsvorrichtung 1 und Aufnahme 13 wird ein flüssiger Kleber eingebracht, der sich aufgrund der Kapillarwirkung in dem Spalt gleichmäßig ausbreitet und einen bündigen Abschluß mit den Oberflächen gewährleistet.

Die erfindungsgemäßen Komponenten des Systemes können wie folgt eingesetzt werden. Wiederum wird eine Anwendung beschrieben, in der die Hybridisierung von Makromolekülen untersucht werden soll.

In die Kartusche 27 wird ein Träger 21 mit einer bekannten Anordnung von Spots 59 von Makromolekülen eingelegt. Auf den Träger 21 werden Abstandshalter 23 plaziert. Mit der aktiven Fläche 16 in Richtung des Trägers 21 wird ein Bewegungselement 15 in den Aufnahmeraum 33 der Kartusche 27 eingelegt, und zwar derart, daß die Elektroden 7, 9 der Bewegungsvorrichtungen 1 oberhalb der Durchgangslöcher 25 zu liegen kommen. Durch die Durchgangsöffnung 55 wird Flüssigkeit mit zweiten Makromolekülen in den Spalt zwischen Bewegungselement 15 und Träger 21 eingebracht. Durch die Kapillarwirkung bewegt sich die Flüssigkeit im Spalt 22 nach außen und bedeckt die Spots 59 aus Makromolekülen. Im Spalt befindliche Luft wird nach außen gedrückt, so daß sich keine Luftblasen bilden können. Ist keine Durchgangsbohrung 55 vorhanden, so wird die Flüssigkeit im Vorhinein auf den Träger 21 aufgebracht, bevor das Bewegungselement 15 eingelegt wird.

Die Kartusche 27 wird durch Zuklappen des Deckels 29 geschlossen, so daß die Federplatte 31 das Bewegungselement 15 in Richtung des Trägers 21 drückt. Mit den Verschlußelementen 37 und 39 wird der Deckel verschlossen.

Die verschlossene Kartusche 27 wird in den Kartuschenaufnahmeraum 43 des Reaktionsgerätes der Figur 5 eingebracht. Selbstverständlich kann auch die Kartusche bereits in dem Reaktionsgerät angeordnet sein, wenn die einzelnen Komponenten in die Kartusche 27 eingelegt werden.

Während des Einbringens der Kartusche 27 in das Reaktionsgerät treten die Federstiftkontakte 45 durch die Durchgangslöcher 25 und kommen in Kontakt mit den Elektroden 7 und 9 der einzelnen Interdigitaltransducer 4 der Bewegungsvorrichtungen 1. Die Kartusche wird mit den Befestigungen 47 in dem Gehäuse 41 des Reaktionsgefäßes gehalten.

Durch eine entsprechende Eingabe über die Tastatur 49 wird von der Wechselspannungseinrichtung des Reaktionsgerätes an den Federstiftkontakten 45 eine Wechselspannung angelegt, die über die Elektroden 7 und 9 an den Interdigitaltransducer 4 der einzelnen Bewegungsvorrichtungen 1 angelegt wird und in der Oberfläche des Chips 11 eine Oberflächenschallwelle erzeugt. Diese überträgt ihren Impuls auf die Flüssigkeit 57.

In der Flüssigkeit wird durch die Oberflächenschallwelle eine Bewegung angeregt, die eine optimale Verteilung der Flüssigkeit über die Spots 59 gewährleistet. Weiterhin sorgt die Oberflächenschallwelle für eine effektive Durchmischung der Flüssigkeit. Die Makromoleküle in der Flüssigkeit können mit den Makromolekülen in den Spots 49 hybridisieren. Mit Hilfe der Widerstandsheizung 53 des Reaktionsgerätes wird ggf. die Heizplatte 38 der Kartusche 27 erwärmt, die wiederum den Träger 21 und die darauf befindliche Flüssigkeit erwärmt, um die Reaktion zu unterstützen. Nach der typischen Hybridisierungszeit, die gegenüber normalen diffusionsgetriebenen Systemen stark verkürzt ist, kann der Träger 21 entnommen werden und untersucht werden, an welchen der Spots 59 eine Hybridisierung stattgefunden hat. Auf diese Weise läßt sich Information über die Art der einzelnen Makromoleküle erhalten. So läßt sich z. B. auch effektiv ein DNA-Screening durchführen.

Bei einer Ausführungsform mit einer Bewegungsvorrichtung 1 gemäß der Figur 2b werden die verschiedenen Interdigitaltransducer 4 nach einem vorbestimmten zeitlichen Programm angesteuert, so daß zu unterschiedlichen Zeitpunkten an unterschiedlichen Orten eine Oberflächenschallwelle mit der Flüssigkeit wechselwirkt. Auf diese Weise wird ein nicht-stationäres Strömungsmuster erzeugt, was eine Verteilung und/oder Durchmischung unterstützt.

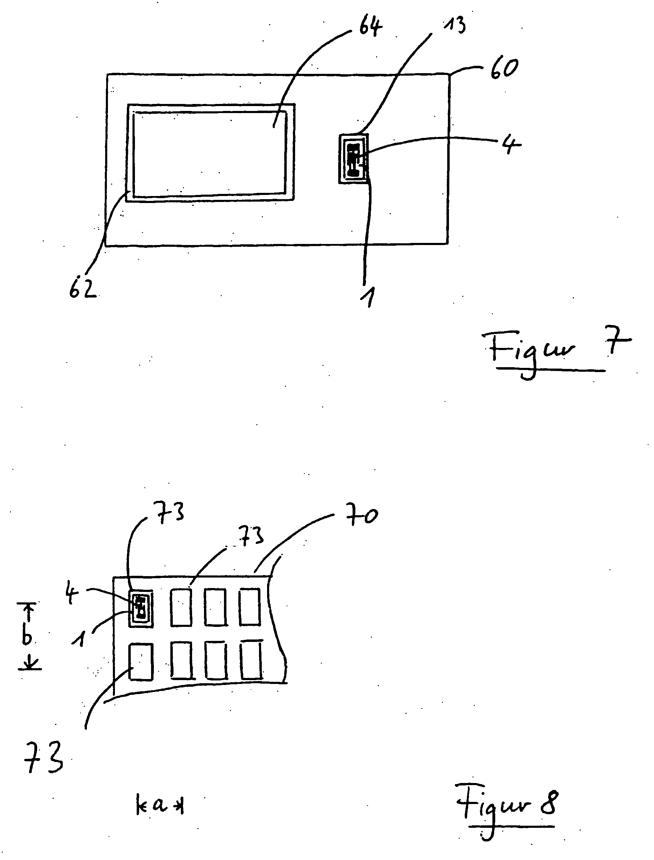

In Figur 7 ist eine andere Ausführungsform eines erfindungsgemäßen Bewegungselementes 60 gezeigt. Das Bewegungselement 60 ist kartenförmig und rechteckig mit den Maßen von z. B. 35 mm x 85 mm. In dem Bewegungselement 60 ist eine Aufnahmevertiefung 62 vorgesehen, deren Maße zur Aufnahme eines konventionellen Objektträgers ausgelegt sind. 64 bezeichnet einen eingelegten Objektträger, dessen Oberfläche mit der Oberfläche des Bewegungselementes 60 in einer Ebene liegt. Auf dem Objektträger 64 kann sich z. B. ein Microarray von Makromolekülen befinden.

In einer weiteren Vertiefung 13 ist eine erfindungsgemäße Bewegungsvorrichtung 1 angeordnet.

Ein solches Bewegungselement 60 kann wie folgt eingesetzt werden. Ein Objektträger 64 mit einem Microarray mit Makromolekülen in bekannter Anordnung wird in die Aufnahmevertiefung 62 eingebracht. Auf das kartenförmige Bewegungselement 60 wird eine Flüssigkeit aufgebracht, die weitere Makromoleküle enthält. Die Flüssigkeit berührt sowohl die Bewegungsvorrichtung 1 als auch den Objektträger 64. Anlegen eines elektrischen Wechselfeldes an den Interdigitaltransducer 4 der Bewegungsvorrichtung 1 erzeugt Oberflächenschallwellen, die ihren Impuls auf die Flüssigkeit bzw. darin enthaltene Bestandteile übertragen. Die Bewegung der Flüssigkeit setzt sich durch die gesamte Flüssigkeitsmenge fort und erzeugt ein charakteristisches Strömungsbild auch in dem Bereich der Flüssigkeit oberhalb des Objektträgers 64. Hier wird eine optimale Durchmischung und Verteilung erreicht, wodurch die Hybridisierung der Makromoleküle in der Flüssigkeit mit den Makromolekülen auf dem Objektträger 64 unterstützt wird.

Ein solches erfindungsgemäßes Bewegungselement 60 kann auch in einer erfindungsgemäßen Kartusche 27 eingesetzt werden, wenn auf den Träger 21 die zu untersuchende Flüssigkeit aufgebracht wird und das Bewegungselement 60 in den Aufnahmeraum 33 mit der aktiven Fläche in Richtung des Trägers 21 eingebracht wird.

Selbstverständlich ist die Anwendung der erfindungsgemäßen Einrichtungen und des erfindungsgemäßen Systemes nicht auf die Untersuchung von Makromolekülen beschränkt. Das System eignet sich für Reaktionen, in denen die effektive Verteilung und Durchmischung einer Flüssigkeit notwendig ist.

In Figur 8 ist ein Ausschnitt eines erfindungsgemäßes Bewegungselementes 70 zur Verwendung mit einer konventionellen Mikro-Titerplatte gezeigt. Es sind mehrere Aufnahmen 73 vorgesehen, in denen einzelne Bewegungsvorrichtungen 1, z. B. piezoelektrische Substrate mit Interdigitaltransducern 4 vorgesehen sind. Der Abstand der einzelnen Bewegungsvorrichtungen 1 entspricht dem typischen Rastermaß einer konventionell erhältlichen Mikro-Titerplatte. Flüssigkeitsmengen, die in die Flüssigkeitsaufnahmen einer Mikro-Titerplatte eingebracht sind, können mit Hilfe dieser erfindungsgemäßen Ausführungsform 70 leicht und parallel gerührt bzw. gemischt werden. Dazu wird das erfindungsgemäße Bewegungselement 70 mit den Bewegungsvorrichtungen 1 auf die Mikro-Titerplatte mit den darin befindlichen Flüssigkeitsmengen aufgelegt. Durch Anlegen entsprechender Wechselspannungen an die Bewegungsvorrichtungen 1 können die Interdigitaltransducer 4 der Bewegungsvorrichtung 1 zur Erzeugung von Oberflächenschallwellen angeregt werden, die sich auf die Flüssigkeitsmengen in den einzelnen Flüssigkeitsaufnahmen einer Mikro-Titerplatte übertragen.

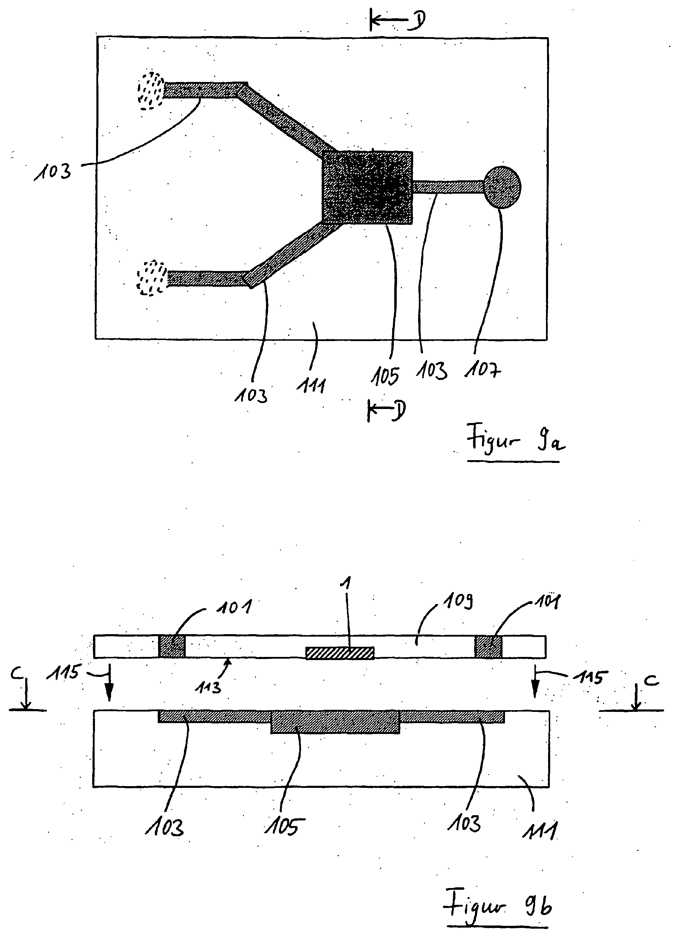

In Figur 9b ist eine weitere Ausführungsform eines erfindungsgemäßen Bewegungselementes in schematischer Seitenteilschnittansicht gezeigt. In einem kartenförmigen Körper 109 befindet sich eine Bewegungsvorrichtung 1, z. B. ein Chip mit einer Oberflächenwellenerzeugungseinrichtung. Nicht gezeigt sind die elektrischen Anschlüsse zur Ansteuerung der Bewegungsvorrichtung 1, die jedoch ähnlich den mit Bezug zu den obigen Ausführungsformen beschriebenen Kontaktierungsmöglichkeiten sind. In dem kartenförmigen Körper 109 befinden sich Durchgänge 101.

Das erfindungsgemäße Bewegungselement kann zusammen mit einem konventionellen mikrofluidischen System eingesetzt werden, das in Figur 9b mit 111 angedeutet ist. Figur 9a zeigt dazu eine Draufsicht auf eine Fläche des mikrofluidischen Systems in Blickrichtung der Pfeile C, wie es in Figur 9b angedeutet ist. 103 bezeichnet mikrofluidische Kanäle, wie sie konventionell z. B. durch Ätzen gebildet werden können. 105 ist eine Vertiefung, in der sich eine Flüssigkeit aufhalten kann, die vermischt oder gerührt werden soll. 107 bezeichnet eine Öffnung, durch die die Flüssigkeit wieder abfließen kann. Diese Öffnung kann z. B. in dem mikrofluidischen System 111 vorgesehen sein oder in dem kartenförmigen Körper 109. In Figur 9a sind strichliniert diejenigen Orte angedeutet, die mit der Öffnung 101 in Berührung kommen, wenn der kartenförmige Körper 109 auf das mikrofluidische System 111 in Richtung der Pfeile 115 aufgebracht wird.

Pfeile D zeigen in Figur 9a die Blickrichtung der Figur 9b. In Figur 9b sind dabei die Kanäle 103 und die Öffnungen 101 zusätzlich angedeutet, obwohl sie nicht in der Blickebene D-D liegen.

Eine solche Ausführungsform kann wie folgt eingesetzt werden. Das erfindungsgemäße Bewegungselement wird in Pfeilrichtung 115 auf ein mikrofluidisches System aufgebracht. Durch die Öffnungen 101 wird Flüssigkeit in das mikrofluidische System eingebracht. Sie fließt entlang der Kanäle 103 in Richtung der Vertiefung 105. Die Bewegungsvorrichtung 1, z. B. ein Interdigitaltransducer wie mit Bezug zu den obigen Ausführungsformen beschrieben, wird elektrisch angeregt und führt zu einer Durchmischung bzw. einer Durchrührung der Flüssigkeit in der Vertiefung 105. Im Anschluß kann die Flüssigkeit durch den Abfluß 107 abfließen. Der Vorgang kann z. B. kontinuierlich passieren, während die Flüssigkeit sich entlang der Kanäle 103 bewegt.

Das System und die einzelnen Komponenten ermöglichen eine einfache Handhabung. Gerade bei der häufigen Anwendung ist es von Vorteil, daß die einzelnen Komponenten bei der Behandlung kein zu großes Geschick erfordern. Im speziellen das einfache aufgebaute Bewegungselement ermöglicht die effektive Verteilung und Durchmischung von Flüssigkeiten auf einfache Weise.

## Patentansprüche

1. Bewegungselement zur Erzeugung von Bewegung in kleinen Flüssigkeitsmengen mit
- einer Platte (15, 60, 70, 109) mit zwei Hauptflächen,
- zumindest einer auf einer aktiven ersten Hauptfläche (16, 113) der Platte (15, 60, 70, 109) angeordneten Bewegungsvorrichtung (1), die elektrisch ansteuerbar ist, um eine Flüssigkeitsmenge (57) in Bewegung zu versetzen, die in Kontakt mit der aktiven Hauptfläche (16) ist, und
- elektrischen Kontaktelementen für die mindestens eine Bewegungsvorrichtung (1),
wobei die mindestens eine Bewegungsvorrichtung (1) zumindest eine Oberflächenschallwellenerzeugungseinrichtung (4) umfasst und in einer Vertiefung (13, 73) der aktiven Hauptfläche (16, 113) derart aufgenommen ist, daß die Oberflächenschallwellenerzeugungseinrichtung (4) und die aktive Hauptfläche (16, 113) im wesentlichen in einer Ebene liegen.

2. Bewegungselement nach Anspruch 1, bei dem die Bewegungsvorrichtung (1) mehrere lateral versetzt zueinander angeordnete Oberflächenschallwellenerzeugungseinrichtungen (4) umfaßt.

3. Bewegungselement nach einem der Ansprüche 1 oder 2, bei dem die mindestens eine Oberflächenschallwellenerzeugungseinrichtung (4) auf einem Chip (11), vorzugsweise einem Festkörperchip aus kristallinem Material, angeordnet ist.

4. Bewegungselement nach Anspruch 3, bei dem die mindestens eine Oberflächenschallwellenerzeugungseinrichtung einen Interdigitaltransducer (4) umfaßt und der Chip (11) piezoelektrisch ist oder einen piezoelektrischen Oberflächenbereich aufweist.

5. Bewegungselement nach einem der Ansprüche 1 bis 4, bei dem die Bewegungsvorrichtung (1) mehrere Interdigitaltransducer (4) unterschiedlicher Resonanzfrequenz aufweist.

6. Bewegungselement nach einem der Ansprüche 1 bis 5, mit einer Aufnahmevertiefung (62) für einen Objektträger (64), mit lateralen Ausmaßen, die die Aufnahme des Objektträgers (64) erlauben, und einer Tiefe, die in etwa der Dicke eines Objektträgers entspricht.

7. Bewegungselement nach einem der Ansprüche 1 bis 6, mit vorzugsweise glattwandigen Sackbohrungen (54) in der aktiven Hauptfläche (16, 113).

8. Bewegungselement nach einem der Ansprüche 1 bis 7, bei dem die Platte (15, 60, 70, 109) kartenförmig ist.

9. Bewegungselement nach einem der Ansprüche 1 bis 8, mit zumindest einer Durchgangsbohrung (55, 101), die die aktive Hauptfläche (16, 113) mit der zweiten Hauptfläche verbindet und sich vorzugsweise trichterförmig zur zweiten Hauptfläche öffnet.

10. Bewegungselement nach einem der Ansprüche 1 bis 9, mit einer vorzugsweise biokompatiblen Schutzbeschichtung zumindest auf der Bewegungsvorrichtung (1).

11. Bewegungselement nach einem der Ansprüche 1 bis 10, bei dem die Platte (15, 60, 70) zumindest teilweise transparent ist.

12. Bewegungselement nach einem der Ansprüche 1 bis 11, bei dem die Platte (15, 60, 70) aus Kunststoff, vorzugsweise Polycarbonat, Polymethylmethacrylat (PMMA) oder Polyethylenterephtalat (PET), gefertigt ist.

13. Bewegungselement nach einem der Ansprüche 1 bis 12, bei dem die mindestens eine Bewegungsvorrichtung (1) lösbar mit der Platte (15, 109) verbunden ist.

14. Bewegungselement nach einem der Ansprüche 1 bis 13, bei dem die elektrischen Kontaktelemente eine Antenneneinrichtung umfassen, durch die drahtlos ein elektrisches Steuersignal in die elektrischen Kontaktelemente eingekoppelt werden kann.

15. Bewegungselement nach einem der Ansprüche 1 bis 14 mit mehreren Bewegungsvorrichtungen (1) auf der aktiven Hauptfläche der Platte (70) in regelmäßiger Anordnung in Matrixform mit einem Rastermaß (a, b), das dem Rastermaß einer Mikro-Titerplatte entspricht.

16. Verfahren zur Erzeugung von Bewegung in kleinen Flüssigkeitsmengen, bei dem eine kleine Flüssigkeitsmenge (57) in Kontakt mit einer Oberfläche (16, 113) gebracht wird und auf der Oberfläche mit zumindest einer Oberflächenschallwelle in Wechselwirkung gebracht wird, wobei sich die kleine Flüssigkeitsmenge auf einer Mikrotiterplatte befindet.

17. Verfahren nach Anspruch 16, bei dem sich die kleine Flüssigkeitsmenge in einem mikrofluidischen System befindet.

18. Verfahren nach einem der Ansprüche 16 oder 17, bei dem die kleine Flüssigkeitsmenge zu unterschiedlichen Zeitpunkten mit Oberflächenschallwellen an unterschiedlichen Orten wechselwirkt.

19. Verfahren nach einem der Ansprüche 16 bis 18, bei dem sich mehrere Flüssigkeitsmengen auf einer Mikrotiterplatte mit einem Rastermaß (a, b) befinden, in Kontakt mit der aktiven Hauptfläche eines Bewegungselementes gemäß Anspruch 15 gebracht werden und mit Hilfe der Bewegungsvorrichtungen (1) des Bewegungselementes in Bewegung versetzt werden.

20. Kartusche zur Aufnahme eines Bewegungselementes (15, 60, 70, 109) nach einem der Ansprüche 1 bis 15, mit
- einem ersten Aufnahmeraum (35) für einen Träger (21, 111) für zumindest eine kleine Flüssigkeitsmenge (57),
- einem zweiten Aufnahmeraum (33) zur Aufnahme des Bewegungselementes (15, 60, 70, 109), der derart mit dem ersten Aufnahmeraum (35) in Verbindung steht, daß eine kleine Flüssigkeitsmenge (57), die sich auf einem Träger (21, 111) im ersten Aufnahmeraum (35) befindet, mit einem Bewegungselement (15, 60, 70, 109) wechselwirken kann, das im zweiten Aufnahmeraum (33) aufgenommen ist, und
- Einrichtungen (25) zur Durchführung der elektrischen Kontaktierung der auf dem Bewegungselement (15, 60, 70, 109) angeordneten Bewegungsvorrichtung (1) bzw. Bewegungsvorrichtungen.

21. Kartusche nach Anspruch 20, bei der die Einrichtungen zur elektrischen Kontaktierung Durchgangsöffnungen (25) für elektrische Verbindungen (45) umfassen.

22. Kartusche nach einem der Ansprüche 20 oder 21, mit einem Deckel (29) zum Verschluß der Aufnahmeräume (33, 35).

23. Kartusche nach einem der Ansprüche 20 bis 22, mit einem Federelement (31) zum Fixieren eines im zweiten Aufnahmeraum (33) aufgenommenen Bewegungselementes (15, 60, 70, 109) bezüglich eines im ersten Aufnahmeraum (35) aufgenommenen Trägers (21, 111).

24. Kartusche nach einem der Ansprüche 20 bis 23 mit einem Heizelement (38), vorzugsweise im Kartuschenboden, zum Erwärmen einer Flüssigkeitsmenge auf einem in die Kartusche (27) eingelegten Träger (21, 111).

25. Kartusche nach Anspruch 24, bei der das Heizelement eine Widerstandheizung umfaßt.

26. Kartusche nach Anspruch 24, bei der das Heizelement eine vorzugsweise metallische Heizplatte (38) zum Übertragen extern applizierter Wärme auf einen in die Kartusche eingelegten Träger (21, 111) umfaßt.

27. Kartusche nach einem der Ansprüche 20 bis 26, mit einem Thermometerelement zur Feststellung der Temperatur einer kleinen Flüssigkeitsmenge (57) auf einem in die Kartusche (27) eingelegten Träger (21, 111).

28. Reaktionsgerät zur Untersuchung und/oder Reaktion kleiner Flüssigkeitsmengen, mit
- einer Kartuschenaufnahme (43) zur Aufnahme einer Kartusche nach einem der Ansprüche 20 bis 27,
- Kontaktelementen (45), die derart angeordnet sind, daß sie ein Bewegungselement (15, 60, 70, 109) nach einem der Ansprüche 1 bis 13 oder 15 in einer in dem Kartuschenaufnahmeraum (43) aufgenommenen Kartusche (27) elektrisch kontaktieren können, und
- einer Wechselspannungserzeugungseinrichtung zur Erzeugung einer Wechselspannung, die über die Kontaktelemente (45) an ein Bewegungselement (15, 60, 70, 109) angelegt werden kann, das in einer Kartusche (27) aufgenommen ist, die sich im Kartuschenaufnahmeraum (43) befindet.

29. Reaktionsgerät nach Anspruch 28, mit einem Heizelement (53) in dem Kartuschenaufnahmeraum (43), vorzugsweise ein Widerstandsheizelement.

30. System zur Erzeugung von Bewegung in einer Flüssigkeit umfassend eine Kartusche (27) nach einem der Ansprüche 20 bis 27, ein Reaktionsgerät (41) nach einem der Ansprüche 28 oder 29 und ein Bewegungselement (15) nach einem der Ansprüche 1 bis 15.

## Claims

1. A motion element for producing motion in small quantities of liquid comprising
- a plate (15, 60, 70, 109) having two principal surfaces,
- at least one motion device (1) which is arranged on an active first principal surface (16, 113) of the plate (15, 60, 70, 109) and which is electrically controllable to set a quantity of liquid (57) in motion, which is in contact with the active principal surface (16), and
- electrical contact elements for the at least one motion device (1),
wherein the at least one motion device (1) comprises at least one surface acoustic wave generating device (4) and is accommodated in a recess (13, 73) of the active principal surface (16, 113) such that the surface acoustic wave generating device (4) and the active principal surface (16, 113) are disposed substantially in one plane.

2. A motion element according to claim 1, wherein the motion device (1) comprises a plurality of surface acoustic wave generating devices (4) arranged laterally offset to one another.

3. A motion element according to claim 1 or claim 2, wherein the at least one surface acoustic wave generating device (4) is arranged on a chip (11), preferably a solid chip made of crystalline material.

4. A motion element according to claim 3, wherein the at least one surface acoustic wave generating device comprises an interdigital transducer (4) and the chip (11) is piezoelectric or has a piezoelectric surface region.

5. A motion element according to any one of the claims 1 to 4, wherein the motion device (1) has a plurality of interdigital transducers (4) with different resonance frequency.

6. A motion element according to any one of the claims 1 to 5, having a receiving recess (62) for an object support (64) with lateral dimensions which allow the reception of the object support (64) and a depth which approximately corresponds to the thickness of an object support.

7. A motion element according to any one of the claims 1 to 6, with preferably smooth-walled blind holes (54) in the active principal surface (16, 113).

8. A motion element according to any one of the claims 1 to 7, wherein the plate (15, 60, 70, 109) is card shaped

9. A motion element according to any one of the claims 1 to 8, with at least one through hole (55, 101) which connects the active principal surface (16, 113) to the second principal surface and preferably opens in a funnel shape towards the second principal surface.

10. A motion element according to any one of the claims 1 to 9, with a preferably biocompatible protective coating at least on the motion device (1).

11. A motion element according to any one of the claims 1 to 10, wherein the plate (15, 60, 70) is at least partly transparent.

12. A motion element according to any one of the claims 1 to 11, wherein the plate (15, 60, 70) is made of plastic, preferably polycarbonate, polymethyl methacrylate (PMMA) or polyethylene terephthalate (PET).

13. A motion element according to any one of the claims 1 to 12, wherein at least one motion device (1) is detachably connected to the plate (15, 109).

14. A motion element according to any one of the claims 1 to 13, wherein the electrical contact elements comprise an antenna device through which an electrical control signal can be coupled wirelessly into the electrical contact elements.

15. A motion element according to any one of the claims 1 to 14, with a plurality of motion devices (1) on the active principal surface of the plate (70) in regular arrangement in matrix form with a grid size (a, b) which corresponds to the grid size of a microtitre plate.

16. A method for producing motion in small quantities of liquid, wherein a small quantity of liquid (57) is brought in contact with a surface (16, 113) and is brought into interaction with at least one surface acoustic wave on the surface, wherein the small quantity of liquid is located on a microtitre plate.

17. A method according to claim 16, wherein the small quantity of liquid is located in a microfluidic system.

18. A method according to one of the claims 16 or 17, wherein the small quantity of liquid interacts at different times with surface acoustic waves at different locations.

19. A method according to any one of the claims 16 to 18, wherein a plurality of quantities of liquid are located on a microtitre plate having a grid size (a, b), are brought in contact with the active principal surface of a motion element according to claim 17 and are set in motion with the aid of the motion devices (1) of the motion element.

20. A cartridge for the reception of a motion element (15, 60, 70, 109) according to any one of the claims 1 to 15, comprising
- a first receiving space (35) for a support (21, 111) for at least one small quantity of liquid (57),
- a second receiving space (33) to receive the motion element (15, 60, 70, 109) which is in communication with the first receiving space (35) such that a small quantity of liquid (57) located on a support (21, 111) in the first receiving space (35) can interact with a motion element (15, 60, 70, 109) accommodated in the second receiving space (33) and
- devices (25) for executing the electrical contacting of the motion device (1) or motion devices arranged on the motion element (15, 60, 70, 109).

21. A cartridge according to claim 20, wherein the devices for electrical contacting comprise through openings (25) for electrical connections (45).

22. A cartridge according to one of the claims 20 or 21, with a cover (29) for closing the receiving spaces (33, 35).

23. A cartridge according to any one of the claims 20 to 2, with a spring element (31) for fixing a motion element (15, 60, 70, 109) accommodated in the second receiving space (33) with respect to a support (21, 111) accommodated in the first receiving space (35).

24. A cartridge according to any one of the claims 20 to 23, with a heating element (38) preferably at the bottom of the cartridge for heating a quantity of liquid on a support (21, 111) inserted in the cartridge (27).

25. A cartridge according to claim 24, wherein the heating element comprises a resistance heater.

26. A cartridge according to claim 24, wherein the heating element comprises a preferably metal heating plate (38) for transferring externally applied heat to a support (21, 111) inserted in the cartridge.

27. A cartridge according to any one of the claims 20 to 26, with a thermometer element to determine the temperature of a small quantity of liquid (57) on a support (21, 111) inserted in the cartridge (27).

28. A reaction device for examining and/or reacting small quantities of liquid, comprising
- a cartridge receiver (43) to accommodate a cartridge according to any one of the claims 20 to 27,
- contact elements (45) which are arranged such that they can come into electrical contact with a motion element (15, 60 70, 109) according to any one of the claims 1 to 13 or 15 in a cartridge (27) accommodated in the cartridge receiving space (43), and
- an alternating voltage generating device to produce an alternating voltage which can be applied via the contact elements (45) to a motion element (15, 60, 70, 109) which is accommodated in a cartridge (27) located in the cartridge receiving space (43).

29. A reaction device according to claim 28 with a heating element (53) in the cartridge receiving space (43), preferably a resistance heating element.

30. A system for producing motion in a liquid comprising a cartridge (27) according to any one of the claims 20 to 27, a reaction device according to one of the claims 28 or 29 and a motion element (15) according to any one of the claims 1 to 15.

## Revendications

1. Elément de mise en mouvement pour engendrer un mouvement dans des petites quantités de liquide, comportant
- une plaque (15, 60, 70, 109) avec deux surfaces principales,
- au moins un dispositif de mise en mouvement (1) agencé sur une première surface principale (16, 113) active de la plaque (15, 60, 70, 109), qui est électriquement pilotable pour mettre en mouvement une quantité de liquide (57) qui est en contact avec la surface principale (16) active, et
- des éléments de contact électriques pour ledit au moins un dispositif de mise en mouvement (1),
dans lequel ledit au moins un dispositif de mise en mouvement (1) comprend au moins un dispositif de génération d'ondes acoustiques de surface (4) et est reçu dans un renfoncement (13, 73) de la surface principale (16, 113) active de telle sorte que le dispositif de génération d'ondes acoustiques de surface (4) et la surface principale (16, 113) active se trouvent sensiblement dans un plan.

2. Elément de mise en mouvement selon la revendication 1, dans lequel le dispositif de mise en mouvement (1) comprend plusieurs dispositifs de génération d'ondes acoustiques de surface (4) agencés en décalage mutuel latéral.

3. Elément de mise en mouvement selon la revendication 1 ou 2, dans lequel ledit au moins un dispositif de génération d'ondes acoustiques de surface (4) est agencé sur une puce (11), de préférence sur une puce de corps solide en matériau cristallin.

4. Elément de mise en mouvement selon la revendication 3, dans lequel ledit au moins un dispositif de génération d'ondes acoustiques de surface comprend au moins un transducteur interdigité (4), et la puce (11) est piézoélectrique ou présente une région de surface piézoélectrique.

5. Elément de mise en mouvement selon l'une des revendications 1 à 4,
dans lequel le dispositif de mise en mouvement (1) présente plusieurs transducteurs interdigités (4) de différente fréquence de résonance.

6. Elément de mise en mouvement selon la revendication 1 à 5, comportant un renfoncement de réception (62) pour un support d'objet (64), comportant des dimensions latérales qui permettent la réception du support d'objet (64) et une profondeur qui correspond approximativement à l'épaisseur d'un support d'objet (64).

7. Elément de mise en mouvement selon l'une des revendications 1 à 6, comportant des perçages borgnes (54) de préférence à parois lisses dans la surface principale (16, 113) active.

8. Elément de mise en mouvement selon l'une des revendications 1 à 7,
dans lequel la plaque (15, 60, 70, 109) est en forme de carte.

9. Elément de mise en mouvement selon l'une des revendications 1 à 8, comportant au moins un perçage traversant (55, 101) qui relie la surface principale (16, 113) active à la deuxième surface principale et s'ouvre de préférence en forme d'entonnoir vers une deuxième surface principale.

10. Elément de mise en mouvement selon l'une des revendications 1 à 9, comportant un revêtement de protection de préférence biocompatible au moins sur le dispositif de mise en mouvement (1).

11. Elément de mise en mouvement selon l'une des revendications 1 à 10, dans lequel la plaque (15, 60, 70) est au moins partiellement transparente.

12. Elément de mise en mouvement selon l'une des revendications 1 à 11, dans lequel la plaque (15, 60, 70) est réalisée en matière plastique, de préférence en polycarbonate, en polyméthylméthacrylate (PMMA) ou en polyéthylène téréphtalate (PET).

13. Elément de mise en mouvement selon l'une des revendications 1 à 12, dans lequel au moins ledit un dispositif de mise en mouvement (1) est relié de manière détachable à la plaque (15, 109).

14. Elément de mise en mouvement selon l'une des revendications 1 à 13, dans lequel les éléments de contact électrique comprennent un dispositif d'antenne au moyen duquel un signal de commande électrique peut être injecté dans les éléments de contact électriques.

15. Elément de mise en mouvement selon l'une des revendications 1 à 14, comportant plusieurs dispositifs de mise en mouvement (1) sur la surface principale active de la plaque (70) en agencement régulier sous forme de matrice avec une dimension de trame (a, b) qui correspond à la dimension de trame d'une plaque microtitre.

16. Procédé de génération de mouvement dans des petites quantités de liquide, dans lequel une petite quantité de liquide (57) est mise en contact avec une surface (16, 113) et sur la surface, elle est mise en interaction avec au moins une onde acoustique de surface, la petite quantité de liquide se trouvant sur une plaque microtitre.

17. Procédé selon la revendication 16, dans lequel la petite quantité de liquide se trouve dans un système microfluidique.

18. Procédé selon l'une des revendications 16 ou 17, dans lequel la petite quantité de liquide interagit à différents moments avec les ondes acoustiques de surface à différents endroits.

19. Procédé selon l'une des revendications 16 à 18, dans lequel plusieurs quantités de liquide se trouvent sur une plaque microtitre avec une dimension de trame (a, b), sont mise en contact avec la surface principale active d'un élément de mise en mouvement selon la revendication 15 et sont mises en mouvement à l'aide des dispositifs de mise en mouvement (1) de l'élément de mise en mouvement.

20. Cartouche destinée à recevoir un élément de mise en mouvement (15, 60, 70, 109) selon l'une des revendications 1 à 15, comportant
- une première chambre de réception (35) pour un support (21, 111) pour au moins une petite quantité de liquide (57),
- une deuxième chambre de réception (33) pour recevoir l'élément de mise en mouvement (15, 60, 70, 109) qui est en liaison avec la première chambre de réception (35) de telle sorte qu'une petite quantité de liquide (57), qui se trouve sur un support (21, 111) dans la première chambre de réception (35), peut entrer en interaction avec un élément de mise en mouvement (15, 60, 70, 109) qui est reçu dans la deuxième chambre de réception (33), et
- des dispositifs (25) pour effectuer la mise en contact électrique du ou des dispositifs de mise en mouvement (1) disposé(s) sur l'élément de mise en mouvement (15, 60, 70, 109).

21. Cartouche selon la revendication 20, dans laquelle les dispositifs de mise en contact électrique comprennent des ouvertures traversantes (25) pour des connexions électriques (45).

22. Cartouche selon l'une des revendications 20 ou 21, comportant un couvercle (29) pour fermer les chambres de réception (33, 35).

23. Cartouche selon l'une des revendications 20 à 22, comportant un élément à ressort (31) pour fixer un élément de mise en mouvement (15, 60, 70, 109) reçu dans la deuxième chambre de réception (33) par rapport à un support (21, 111) reçu dans la première chambre de réception (35).

24. Cartouche selon l'une des revendications 20 à 23, comportant un élément de chauffage (38), de préférence dans le fond de la cartouche, pour réchauffer une quantité de liquide sur un support (21, 111) inséré dans la cartouche (27).

25. Cartouche selon la revendication 24, dans laquelle l'élément de chauffage comprend un chauffage à résistance.

26. Cartouche selon la revendication 24, dans laquelle l'élément de chauffage comprend une plaque de chauffage (38) de préférence métallique pour transmettre de la chaleur appliquée depuis l'extérieur sur un support (21, 111) inséré dans la cartouche.

27. Cartouche selon l'une des revendications 20 à 26, comportant un élément de thermomètre pour constater la température d'une petite quantité de liquide (57) sur un support (21, 111) inséré dans la cartouche (27),

28. Appareil de réaction pour l'examen et/ou la réaction de petites quantités de liquide, comportant
- une chambre de réception de cartouche (43) pour recevoir une cartouche selon l'une des revendications 20 à 27,
- des éléments de contact (45) qui sont agencés de telle sorte qu'ils peuvent mettre électriquement en contact un élément de mise en mouvement (15, 60, 70, 109) selon l'une des revendications 1 à 13 ou 15 dans une cartouche (27) reçue dans la chambre de réception de cartouche (43), et
- une génératrice de courant alternatif pour engendrer un courant alternatif qui peut être appliqué via les éléments de contact (45) à un élément de mise en mouvement (15, 60, 70, 109) qui est reçu dans une cartouche (27) qui se trouve dans la chambre de réception de cartouche (43).

29. Appareil de réaction selon la revendication 28, comportant un élément de chauffage (53) dans la chambre de réception de cartouche (43), de préférence un élément de chauffage à résistance.

30. Système de génération de mouvement dans un liquide comprenant une cartouche (27) selon l'une des revendications 20 à 27, un appareil de réaction (41) selon l'une des revendications 28 ou 29 et un élément de mise en mouvement (15) selon l'une des revendications 1 à 15.
